(19)

Europäisches
Patentamt
European
Patent Office
Office européen
des brevets

(11) EP 3 358 472 A1

(12) EUROPEAN PATENT APPLICATION

(43) Date of publication:
08.08.2018 Bulletin 2018/32

(51) Int Cl.:
G06F 17/27 (2006.01)   G06Q 50/00 (2012.01)

(21) Application number: 18150193.3

(22) Date of filing: 03.01.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 03.02.2017   US 201715424199

(71) Applicant: Accenture Global Solutions Limited
Dublin 4 (IE)
(72) Inventors:
• LECUE, Freddy
  Dublin, D15 (IE)
• ZAMAN, Md Faisal
  Dublin, 2 (IE)
• SIROTKOVIC, Jadran
  Dublin, 15 (IE)

(74) Representative: Müller-Boré & Partner
Patentanwälte PartG mbB
Friedenheimer Brücke 21
80639 München (DE)

(54) **USER CLASSIFICATION BASED ON MULTIMODAL INFORMATION**

(57)   A device may receive information associated with a user that is to be classified. The information may be associated with multiple data formats. The device may identify a set of entities based on the information associated with the user that is to be classified. The device may generate a first graph data structure based on the set of entities. The device may determine a similarity score associated with the first graph data structure and a second graph data structure. The second graph data structure may be associated with a set of classified users. The device may provide information that identifies the similarity score to permit and/or cause an action to be performed.

EP 3 358 472 A1

**Description**

BACKGROUND

In machine learning and natural language processing, a topic model is a type of statistical model for discovering the abstract topics that occur in a collection of documents. Topic modeling is a text-mining tool for discovery of hidden semantic structures in a text body.

SUMMARY

According to some possible implementations, a device may include one or more processors to receive information associated with a user that is to be classified. The information may be associated with multiple data formats. The one or more processors may identify a set of entities based on the information associated with the user that is to be classified. A first subset of entities, of the set of entities, may be identified in information associated with a first data format of the multiple data formats, and a second subset of entities, of the set of entities, may be identified in information associated with a second data format of the multiple data formats. The one or more processors may generate a first graph data structure based on the set of entities. The first graph data structure may include a set of nodes that correspond to the set of entities. The one or more processors may receive information that identifies a relationship between a first entity, of the set of entities, and a second entity of the set of entities. The one or more processors may add an edge between a first node, of the set of nodes, and a second node of the set of nodes based on the information that identifies the relationship. The edge may be associated with the relationship. The one or more processors may determine a similarity score associated with the first graph data structure and a second graph data structure based on adding the edge between the first node and the second node. The first graph data structure may be associated with the user to be classified, and the second graph data structure may be associated with another user. The one or more processors may provide information that identifies the similarity score between the user and the other user.
In some possible implementations, a method may include receiving, by a device, information associated with a user that is to be classified. The information may be associated with multiple data formats. The method may include identifying, by the device, a set of entities based on the information associated with the user that is to be classified. The method may include generating, by the device, a first graph data structure based on the set of entities. The first graph data structure may include a set of nodes that correspond to the set of entities. The method may include receiving, by the device, information that identifies a relationship between a first entity, of the set of entities, and a second entity of the set of entities. The method may include adding, by the device, an edge between a first node, of the set of nodes, and a second node of the set of nodes based on the information that identifies the relationship. The method may include determining, by the device, a similarity score associated with the first graph data structure and a second graph data structure based on adding the edge between the first node and the second node. The method may include providing, by the device, information that identifies the similarity score.
In some possible implementations, a non-transitory computer-readable medium may store one or more instructions that, when executed by one or more processors, cause the one or more processors to receive information associated with a user that is to be classified. The information may be associated with multiple data formats. The one or more instructions may cause the one or more processors to identify a set of entities based on the information associated with the user that is to be classified. The one or more instructions may cause the one or more processors to generate a first graph data structure based on the set of entities. The first graph data structure may include a set of nodes that correspond to the set of entities. The one or more instructions may cause the one or more processors to determine a similarity score associated with the first graph data structure and a second graph data structure. The second graph data structure being associated with a set of classified users. The one or more instructions may cause the one or more processors to provide information that identifies the similarity score to permit and/or cause an action to be performed.

BRIEF DESCRIPTION OF THE DRAWINGS

Figs. 1A-1I are diagrams of an overview of an example implementation described herein;
Fig. 2 is a diagram of an example environment in which systems and/or methods, described herein, may be implemented;
Fig. 3 is a diagram of example components of one or more devices of Fig. 2;
Fig. 4 is a flow chart of an example process for generating a graph data structure based on multimodal information; and
Fig. 5 is a flow chart of an example process for determining a classification score for a user based on a model.

DETAILED DESCRIPTION

The following detailed description of example implementations refers to the accompanying drawings. The same reference numbers in different drawings may identify the same or similar elements.

Classification of a user may be desirable. For example, classifying and identifying users that pose a particular threat to others may enable a particular agency, organization, etc. to take preventative measures. In this case, classifying a large number of users in a timely and reliable manner may be desirable.

Implementations described herein enable a classification platform to automatically classify users based on multimodal information associated with the users (e.g., text information, video information, audio information, etc.). The classification platform may receive user information (e.g., the multimodal information), standardize the information such that the information is represented in a particular format (e.g., text), and identify and resolve a set of entities (e.g., terms identifying individuals, objects, locations, concepts, etc.) based on the standardized information.

The classification platform may generate a graph data structure having nodes that correspond to the entities, receive information identifying a relationship between particular entities, and generate a modified graph data structure based on the relationship (e.g., may add an edge between the nodes corresponding to the particular entities).

The classification platform may determine a set of parameters based on the modified graph data structure, input the parameters to a model to classify the user, determine a classification score associated with the user, and provide information that identifies the classification score to cause an action to be performed. In this way, the classification platform automatically classifies a potentially large number of users in a timely, efficient, and accurate manner, thereby conserving processor and/or memory resources of computing devices associated with user classification and/or conserving network resources. Additionally, implementations described herein reduce a number of situations where a user is inaccurately classified and actions are taken in association with the inaccurately classified user. Thereby, implementations described herein conserve processor and/or memory resources of computing devices associated with such classifications and/or actions performed based on the erroneous classifications.

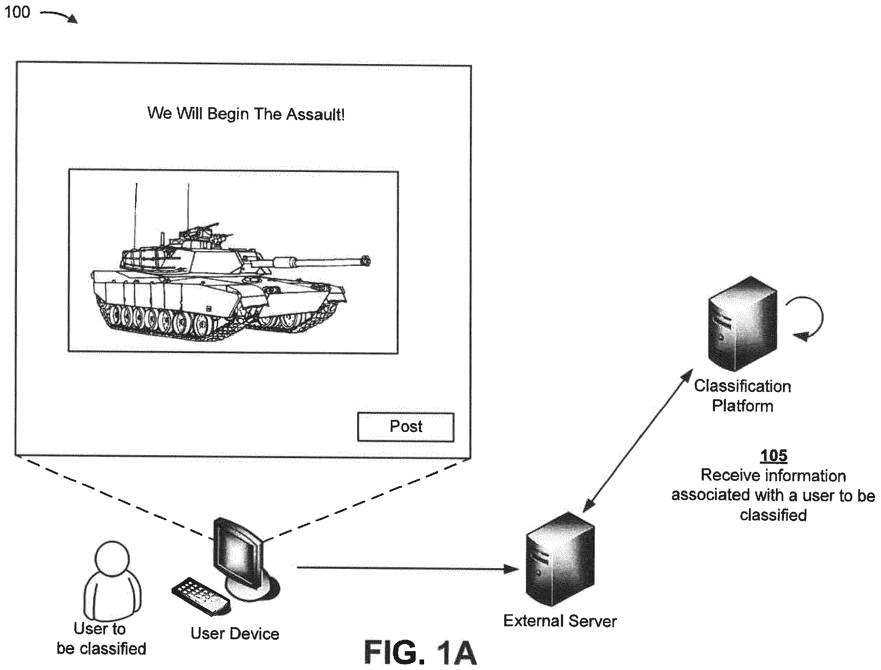

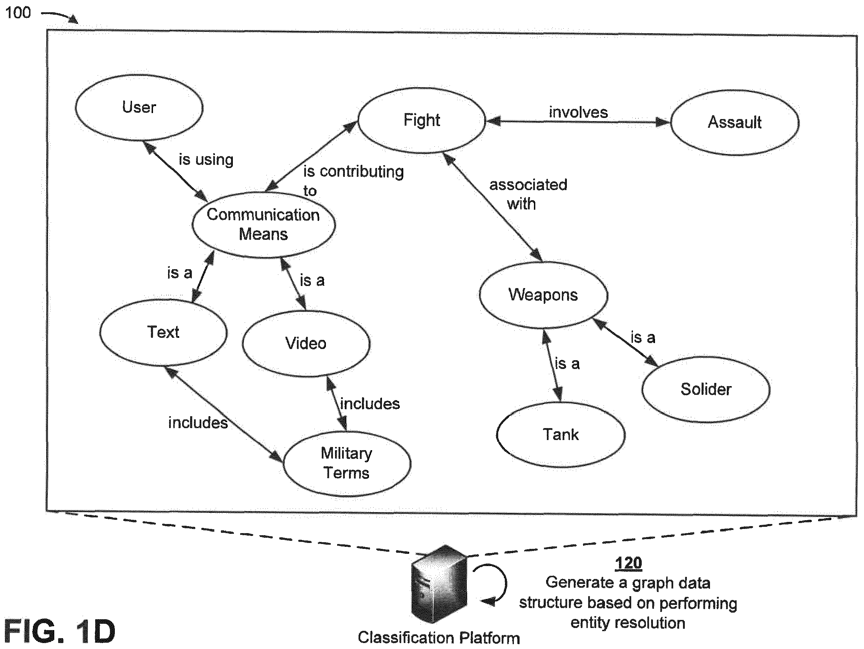

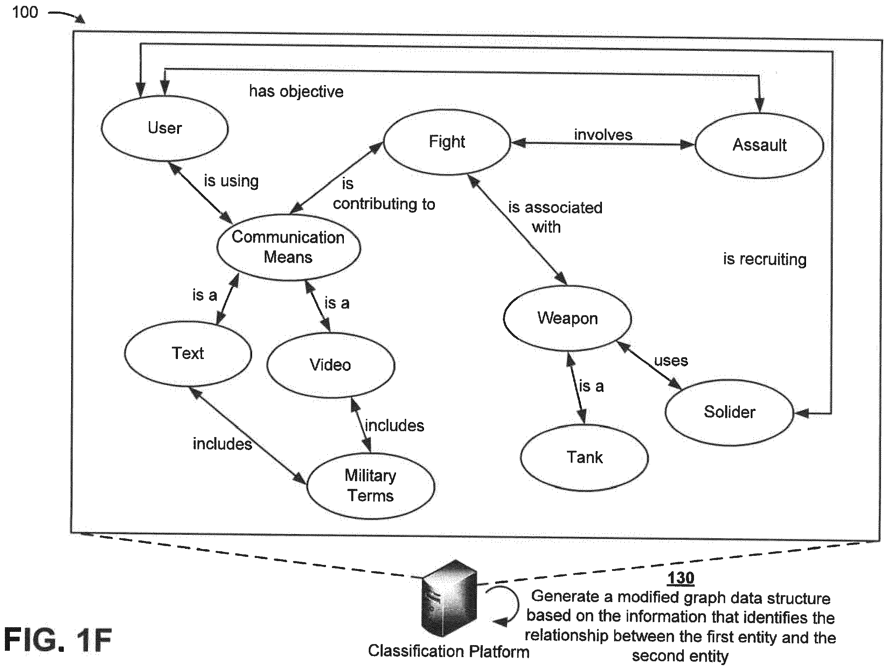

Figs. 1A-1I are diagrams of an overview of an example implementation 100 described herein. As shown in Fig. 1A, and by reference number 105, a classification platform (e.g., a cloud server) may receive information associated with a user to be classified. For example, the user may include an individual, a group of individuals, an organization, a business, an institution, or the like. While a single user is shown in Fig. 1A, in practice, the classification platform may receive information associated with hundreds, thousands, millions, etc. of users to be classified. In some implementations, the information may include a set of resources (e.g., documents, web pages, etc.) that are associated with various file types and/or formats, such as text, image, video, audio, or the like. As an example, a user to be classified may interact with a user device to generate social media posts. For example, as shown, a user may generate a social media post that includes an image of a military vehicle (i.e., a tank) and text indicating "We Will Begin The Assault!"

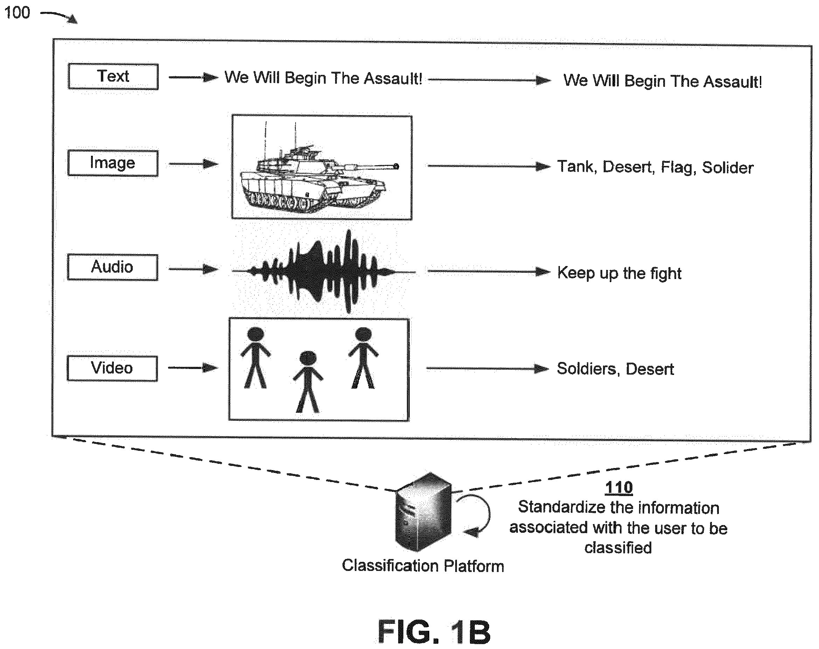

As shown in Fig. 1B, and by reference number 110, the classification platform may standardize the information associated with the user to be classified. In some implementations, the classification platform may standardize the information to prepare the information for processing, and/or such that the information is represented in a particular format. For example, as shown, the classification platform may standardize the information such that the information is represented as text. The classification platform may implement various techniques (e.g., natural language text processing, audio processing, video processing, image processing, etc.) to standardize the information.

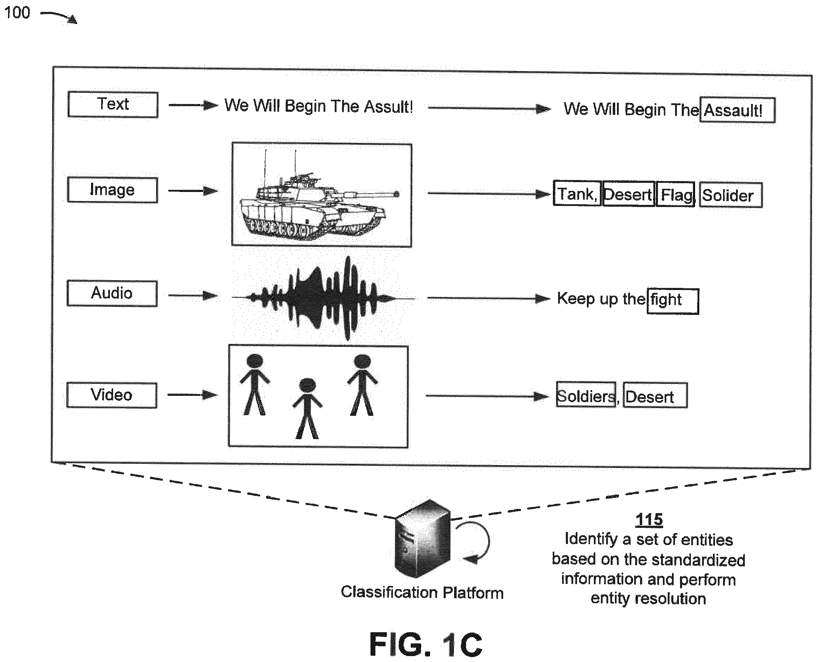

As shown in Fig. 1C, and by reference number 115, the classification platform may identify a set of entities based on the standardized information and perform entity resolution. For example, an entity may include an individual, an object, a location, an organization, a concept, or the like. In some implementations, a term may identify an entity. For example, as shown, the classification platform may identify the terms "Assault," "Tank," "Desert," "Flag," "Solider," "fight," "Soldiers," and "Desert," and identify entities based on the terms.

In some implementations, the classification platform may perform a technique to resolve entities based on identifying the set of entities. For example, the classification platform may analyze the entities and determine entities that are the same, such as based on having a same term (e.g., "Desert" and "Desert") or similar variant (e.g., "Soldier" and "Soldiers"), based on the entities being synonyms, based on the entities having similar meanings, or the like. In some implementations, the classification platform may perform entity resolution by comparing entities and terms associated with an external data structure (e.g., a database, a knowledge graph, or the like).

As shown in Fig. ID, and by reference number 120, the classification platform may generate a graph data structure based on performing entity resolution. For example, the graph data structure may include a data structure that represents data in a graph format, such as a knowledge graph, a graph database, a knowledge base, or the like. In some implementations, the graph data structure may include a set of nodes and a set of edges that are associated with the set of nodes. For example, the set of nodes may correspond to entities, and the set of edges may correspond to relationships between nodes. As a particular example, a first node (e.g., "fight") and a second node (e.g., "weapons") may include an edge (e.g., "associated with") that identifies a relationship between the first node and the second node.

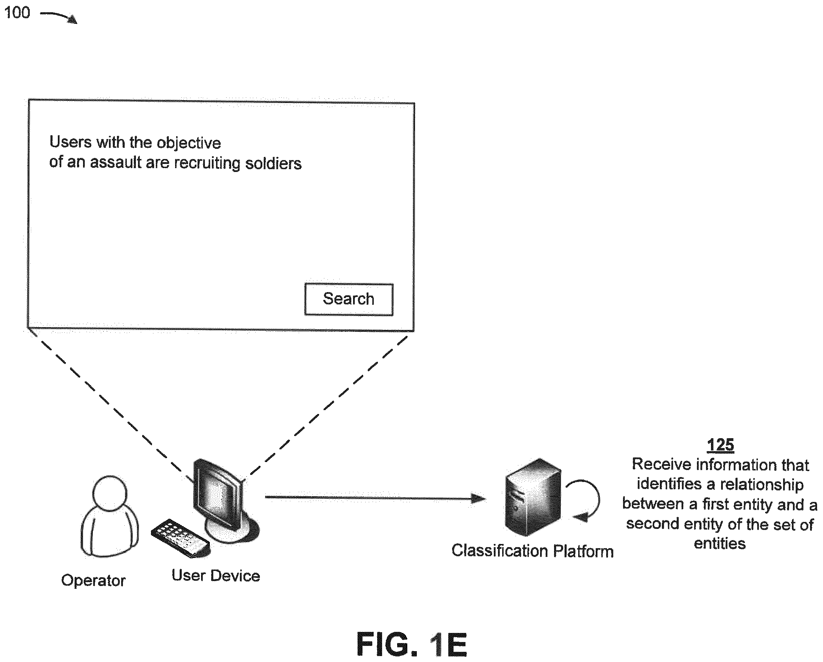

As shown in Fig. 1E, and by reference number 125, the classification platform may receive information that identifies a relationship between a first entity and a second entity of the set of entities. For example, as shown, an operator (e.g., a person desiring to classify users) may interact with a user device to perform a search for particular users to be classified. As a particular example, the information that identifies the relationship may include a search query generated by the operator, as shown. Continuing the particular example, the operator may be associated with a particular organization, and desire to identify users that pose a particular threat, are engaging in particular activities, include a particular propensity, or the like.

As shown in Fig. IF, and by reference number 130, the classification platform may generate a modified graph data structure based on the information that identifies the relationship between the first entity and the second entity. For example, the modified graph data structure may include the graph data structure, as described above, with the addition of modifications such as additional edges between nodes. As a particular example, the classification platform may add the edge "has objective" between the "user" node and the "assault" node, as shown. As another example, the classification platform may add the edge "is recruiting" between the "user" node and the "soldier" node, as shown.

In this way, the classification platform may receive information (e.g., based on the input from the operator desiring to classify users) and add the information to a graph data structure, which enables more accurate classification of users as compared to a situation where the information is not added to the graph data structure. In this way, implementations described herein conserve processor and/or memory resources of computing devices associated with user classification by enabling more accurate classification, preventing false positives, or the like.

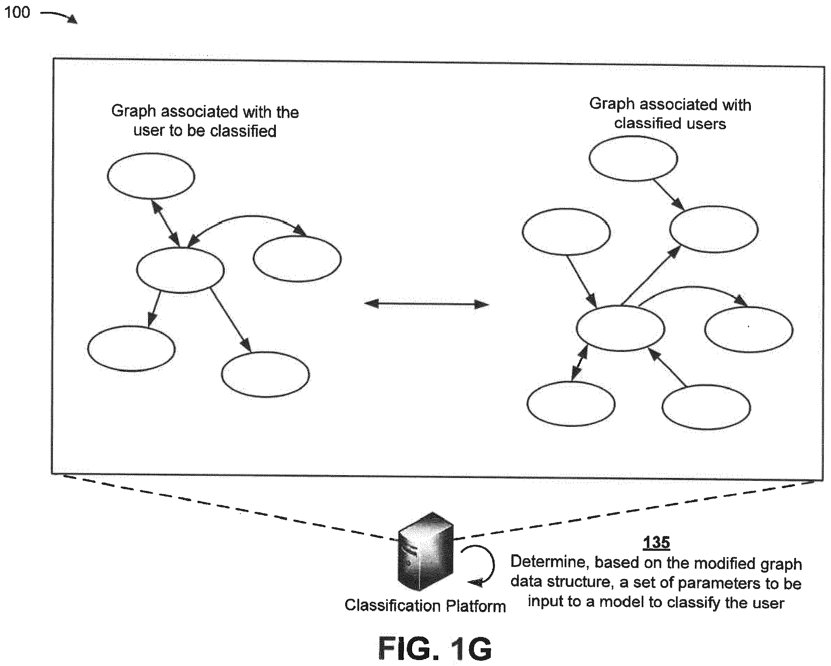

As shown in Fig. 1G, and by reference number 135, the classification platform may determine, based on the modified graph data structure, a set of parameters to be input to a model to classify the user. In some implementations, the set of parameters may include a parameter that corresponds to the existence of a set of nodes and/or edges associated with a graph that corresponds to the user to be classified (e.g., edges added in association with the modified graph data structure). In some implementations, the set of parameters may include a similarity score that identifies a similarity between information, associated with the user to be classified, and information associated with the set of classified users (e.g., users associated with known classifications). In some implementations, the set of parameters may include a parameter that corresponds to an alignment score between an entity, associated with information of a user to be classified, and an entity associated with information associated with a set of classified users. Additional details regarding the set of parameters are described elsewhere herein.

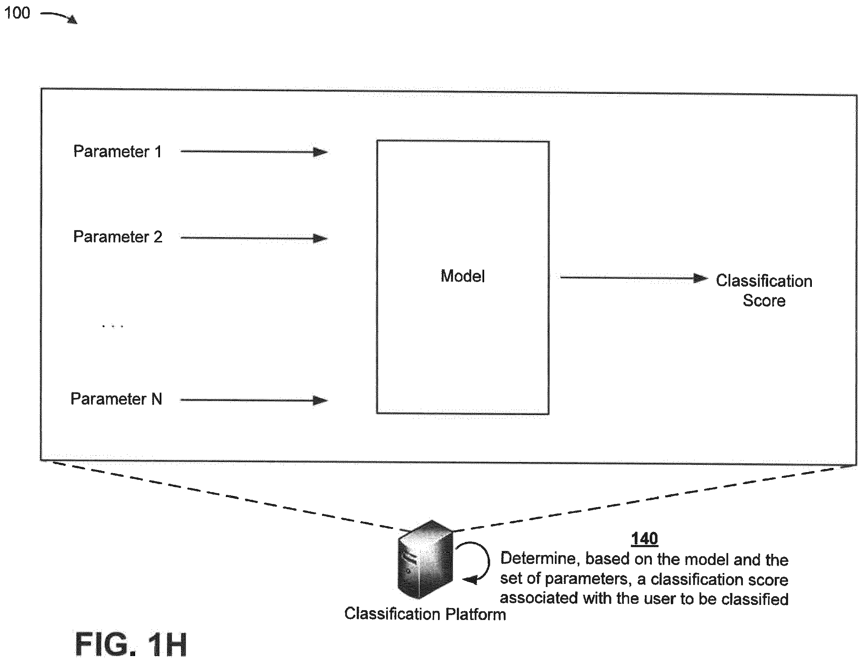

As shown in Fig. 1H, and by reference number 140, the classification platform may determine, based on the model and the set of parameters, a classification score associated with the user to be classified. For example, the classification score may be indicative of the user being associated with a particular classification (e.g., a confidence score, or the like). In some implementations, the classification platform may use machine learning techniques to analyze data (e.g., training data, such as historical data, data associated with classified users, etc.) to generate and train the model.

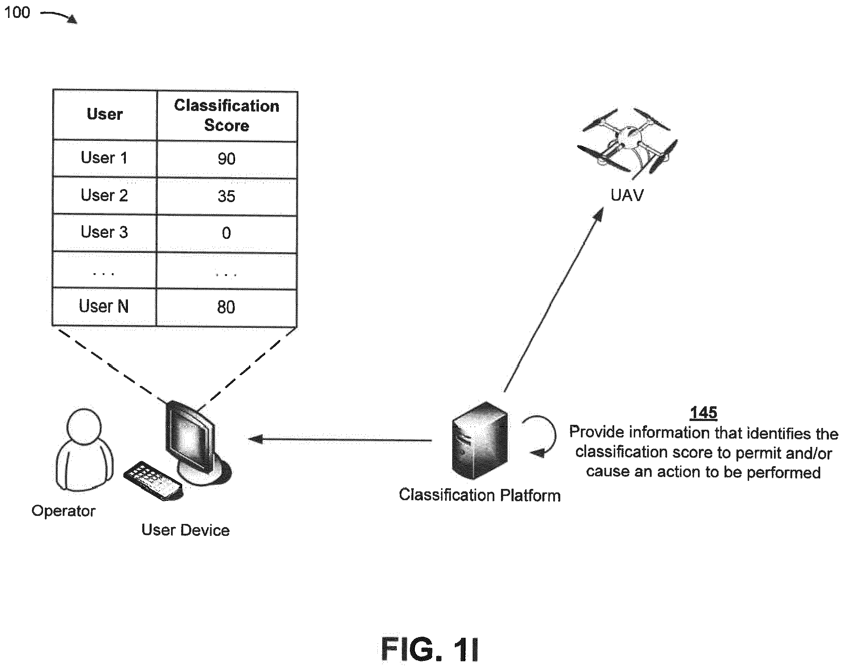

As shown in Fig. 1I, and by reference number 145, the classification platform may provide information that identifies the classification score to permit and/or cause an action to be performed. For example, the classification platform may provide information to a user device for display, such as for an operator to review and determine an action to perform. As another example, the classification platform may provide the information to cause automatic performance of an action. As a particular example, the classification platform may send an instruction to an unmanned aerial vehicle (UAV) to collect additional information regarding a user having a particular classification score.

In this way, the classification platform automatically classifies users (e.g., hundreds of users, thousands of users, millions of users, etc.) in a timely and efficient manner, thereby conserving resources such as processor resources, memory resources, and/or other resources associated with determining the classification score and/or performing the action.

While implementations herein describe classifying particular users and/or classifying users based on particular characteristics associated with the users, it should be understood that other implementations include classifying other sets of users having other characteristics. Additionally, while implementations describe classifying users based on particular information and/or using particular techniques, it should be understood that other implementations include classifying users based on other types of information and/or based on using other types of techniques.

As indicated above, Figs. 1A-1I are provided merely as an example. Other examples are possible and may differ from what was described with regard to Figs. 1A-1I.

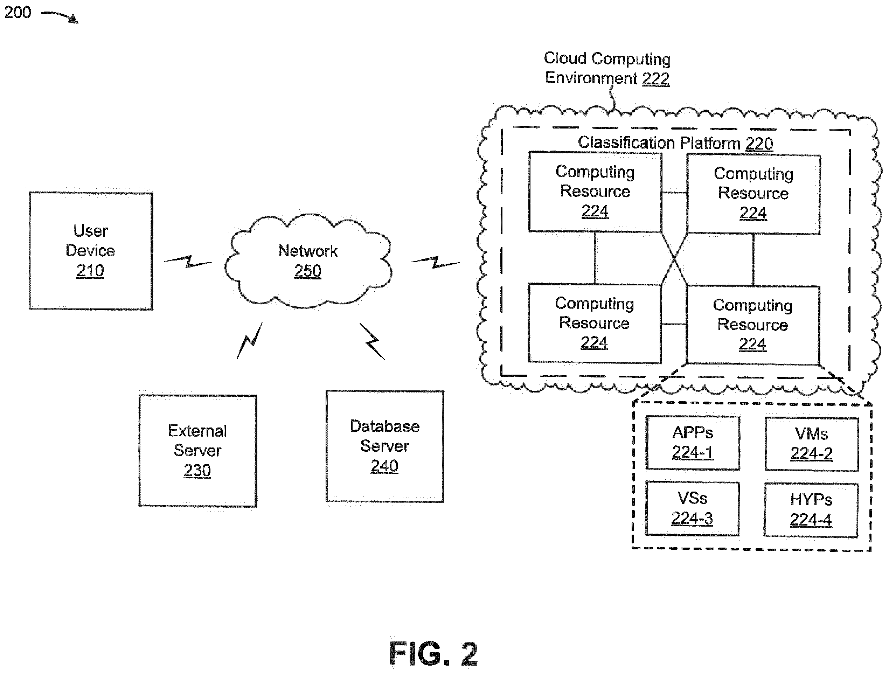

Fig. 2 is a diagram of an example environment 200 in which systems and/or methods, described herein, may be implemented. As shown in Fig. 2, environment 200 may include a user device 210, a classification platform 220, an external server 230, a database server 240, and a network 250. Devices of environment 200 may interconnect via wired connections, wireless connections, or a combination of wired and wireless connections.

User device 210 includes one or more devices capable of receiving, generating, storing, processing, and/or providing information associated with classification platform 220. For example, user device 210 may include a computing device, such as a desktop computer, a laptop computer, a tablet computer, a handheld computer, a server device, a mobile phone (e.g., a smart phone or a radiotelephone), a wearable communication device (e.g., a smart wristwatch, an activity band, or a pair of smart eyeglasses), a gaming device, or a similar type of device.

Classification platform 220 includes one or more devices capable of receiving information associated with a set of users to be classified, identifying sets of entities based on the information, generating graph data structures based on the sets of entities, and/or determining classification scores based on the graph data structures and models. In some implementations, classification platform 220 may be designed to be modular such that certain software components can be swapped in or out depending on a particular need. As such, classification platform 220 may be easily and/or quickly reconfigured for different uses.

In some implementations, as shown, classification platform 220 may be hosted in cloud computing environment 222. Notably, while implementations described herein describe classification platform 220 as being hosted in cloud computing environment 222, in some implementations, classification platform 220 may not be cloud-based (i.e., may be implemented outside of a cloud computing environment) or may be partially cloud-based.

Cloud computing environment 222 includes an environment that hosts classification platform 220. Cloud computing environment 222 may provide computation, software, data access, storage, etc. services that do not require end-user (e.g., user device 210) knowledge of a physical location and configuration of system(s) and/or device(s) that hosts classification platform 220. As shown, cloud computing environment 222 may include a group of computing resources 224 (referred to collectively as "computing resources 224" and individually as "computing resource 224").

Computing resource 224 includes one or more personal computers, workstation computers, server devices, or other types of computation and/or communication devices. In some implementations, computing resource 224 may host classification platform 220. The cloud resources may include compute instances executing in computing resource 224, storage devices provided in computing resource 224, data transfer devices provided by computing resource 224, etc. In some implementations, computing resource 224 may communicate with other computing resources 224 via wired connections, wireless connections, or a combination of wired and wireless connections.

As further shown in Fig. 2, computing resource 224 includes a group of cloud resources, such as one or more applications ("APPs") 224-1, one or more virtual machines ("VMs") 224-2, virtualized storage ("VSs") 224-3, one or more hypervisors ("HYPs") 224-4, or the like.

Application 224-1 includes one or more software applications that may be provided to or accessed by client device 205. Application 224-1 may eliminate a need to install and execute the software applications on client device 205. For example, application 224-1 may include software associated with classification platform 220 and/or any other software capable of being provided via cloud computing environment 222. In some implementations, one application 224-1 may send/receive information to/from one or more other applications 224-1, via virtual machine 224-2.

Virtual machine 224-2 includes a software implementation of a machine (e.g., a computer) that executes programs like a physical machine. Virtual machine 224-2 may be either a system virtual machine or a process virtual machine, depending upon use and degree of correspondence to any real machine by virtual machine 224-2. A system virtual machine may provide a complete system platform that supports execution of a complete operating system ("OS"). A process virtual machine may execute a single program, and may support a single process. In some implementations, virtual machine 224-2 may execute on behalf of a user (e.g., client device 205), and may manage infrastructure of cloud computing environment 222, such as data management, synchronization, or long-duration data transfers.

Virtualized storage 224-3 includes one or more storage systems and/or one or more devices that use virtualization techniques within the storage systems or devices of computing resource 224. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

Hypervisor 224-4 may provide hardware virtualization techniques that allow multiple operating systems (e.g., "guest operating systems") to execute concurrently on a host computer, such as computing resource 224. Hypervisor 224-4 may present a virtual operating platform to the guest operating systems, and may manage the execution of the guest operating systems. Multiple instances of a variety of operating systems may share virtualized hardware resources.

External server 230 includes one or more devices, accessible through network 250, that are sources of information that may be used by classification platform 220. For example, external server 230 may include a server that includes particular information for use by classification platform 220 and/or user device 210. For example, external server 230 may include a server or a group of servers (e.g., a cloud-based server, an application device, a content server, a host server, a web server, a database server, etc.), a desktop computer, or a similar device.

Database server 240 includes one or more devices capable of receiving, storing, and/or providing information for use by classification platform 220. For example, database server 240 may include a server or a group of servers. In some implementations, database server 240 may provide, to classification platform 220, information and/or resources.

Network 250 may include one or more wired and/or wireless networks. For example, network 250 may include a cellular network (e.g., a fifth generation (5G) network, a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

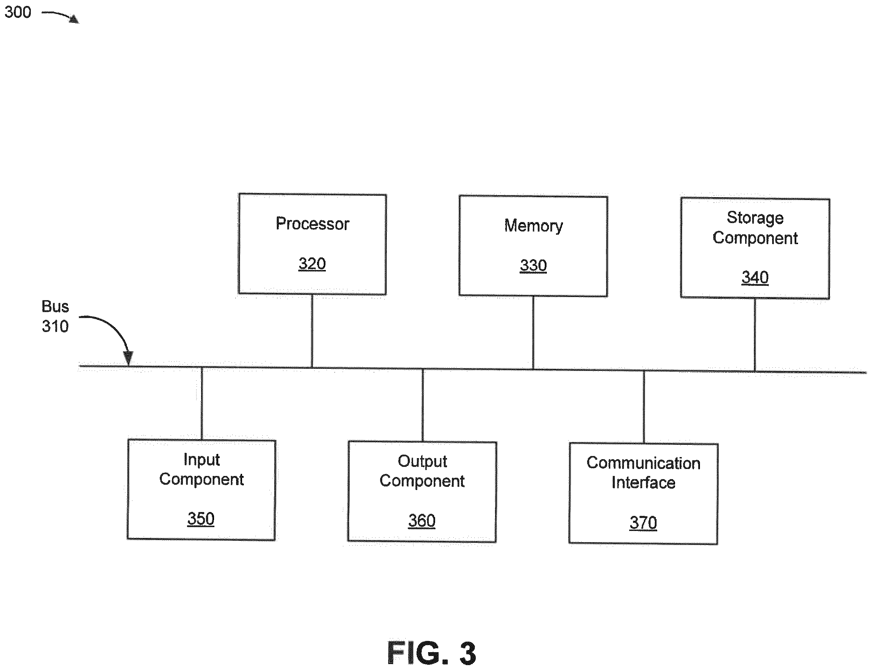

Fig. 3 is a diagram of example components of a device 300. Device 300 may correspond to user device 210, classification platform 220, external server 230, and/or database server 240. In some implementations, user device 210, classification platform 220, external server 230 and/or database server 240 may include one or more devices 300 and/or one or more components of device 300. As shown in Fig. 3, device 300 may include a bus 310, a processor 320, a memory 330, a storage component 340, an input component 350, an output component 360, and a communication interface 370.

Bus 310 includes a component that permits communication among the components of device 300. Processor 320 is implemented in hardware, firmware, or a combination of hardware and software. Processor 320 is a central processing unit (CPU), a graphics processing unit (GPU), an accelerated processing unit (APU), a microprocessor, a microcontroller, a digital signal processor (DSP), a field-programmable gate array (FPGA), an application-specific integrated circuit (ASIC), or another type of processing component. In some implementations, processor 320 includes one or more processors capable of being programmed to perform a function. Memory 330 includes a random access memory (RAM), a read only memory (ROM), and/or another type of dynamic or static storage device (e.g., a flash memory, a magnetic memory, and/or an optical memory) that stores information and/or instructions for use by processor 320.

Storage component 340 stores information and/or software related to the operation and use of device 300. For example, storage component 340 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 350 includes a component that permits device 300 to receive information, such as via user input (e.g., a touch screen display, a keyboard, a keypad, a mouse, a button, a switch, and/or a microphone). Additionally, or alternatively, input component 350 may include a sensor for sensing information (e.g., a global positioning system (GPS) component, an accelerometer, a gyroscope, and/or an actuator). Output component 360 includes a component that provides output information from device 300 (e.g., a display, a speaker, and/or one or more light-emitting diodes (LEDs)).

Communication interface 370 includes a transceiver-like component (e.g., a transceiver and/or a separate receiver and transmitter) that enables device 300 to communicate with other devices, such as via a wired connection, a wireless connection, or a combination of wired and wireless connections. Communication interface 370 may permit device 300 to receive information from another device and/or provide information to another device. For example, communication interface 370 may include an Ethernet interface, an optical interface, a coaxial interface, an infrared interface, a radio frequency (RF) interface, a universal serial bus (USB) interface, a Wi-Fi interface, a cellular network interface, or the like.

Device 300 may perform one or more processes described herein. Device 300 may perform these processes in response to processor 320 executing software instructions stored by a non-transitory computer-readable medium, such as memory 330 and/or storage component 340. A computer-readable medium is defined herein as a non-transitory memory device. A memory device includes memory space within a single physical storage device or memory space spread across multiple physical storage devices.

Software instructions may be read into memory 330 and/or storage component 340 from another computer-readable medium or from another device via communication interface 370. When executed, software instructions stored in memory 330 and/or storage component 340 may cause processor 320 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 3 are provided as an example. In practice, device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

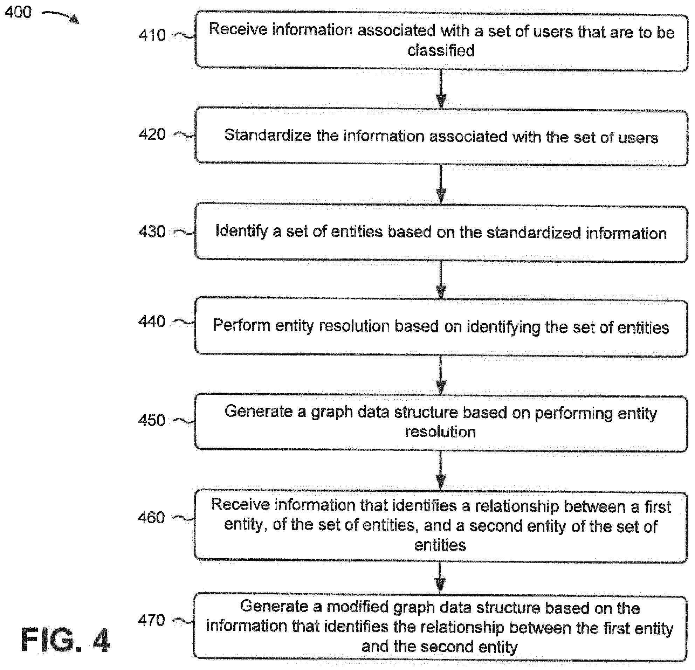

Fig. 4 is a flow chart of an example process 400 for generating a graph data structure based on multimodal information. In some implementations, one or more process blocks of Fig. 4 may be performed by classification platform 220. In some implementations, one or more process blocks of Fig. 4 may be performed by another device or a group of devices separate from or including classification platform 220, such as user device 210, external server 230, and/or database server 240.

As shown in Fig. 4, process 400 may include receiving information associated with a set of users that are to be classified (block 410). For example, classification platform 220 may receive, from external server 230 and/or database server 240, information associated with a set of users that are to be classified. In some implementations, a user may include an individual, a group of individuals, an organization, a business, an institution, or the like. In some implementations, classification platform 220 may classify a user based on information associated with a user, such as content that is generated by the user. For example, classification platform 220 may associate a user with a particular classification based on content that is generated by the user and/or associated with the user. In some implementations, classification platform 220 may classify users that share a common characteristic, trait, propensity, etc., in accordance with a same classification. As an example, users that are generating or seeking similar content may be associated with a same or similar classification. In some implementations, and as described elsewhere herein, classification platform 220 may determine content similarity based on various techniques (e.g., topic modeling techniques, natural language text processing techniques, semantic analysis techniques, or the like).

In some implementations, the information associated with a user may include a resource (e.g., user generated content such as a document, a webpage, a weblog post, a social media account post, an email, an image file, an audio file, a video file, or the like). Additionally, or alternatively, the information associated with the user may include a resource identifier (e.g., a uniform resource identifier (URI), a uniform resource locator (URL), a uniform resource name (URN), a network address, a database address, or the like).

Additionally, or alternatively, the information associated with the user may include a resource associated with a particular file type and/or format (e.g., a hypertext markup language (HTML) file, an extensible markup language (XML) file, a text file, a joint photographic experts group (JPEG) file, a portable network graphics (PNG) file, a motion photographic experts group (MPEG) file, an audio video interleave (AVI) file, a portable document format (PDF) file, or the like). Additionally, or alternatively, the information associated with the user may include a resource associated with a particular source (e.g., a user that generated the information, a device that stores the resource, or the like).

In some implementations, classification platform 220 may receive information associated with a user account (e.g., a user account associated with a service, such as a social media service, a networking service, an email service, etc., and/or another type of user account associated with posts that include text information, audio information, video information, image information, or the like). For example, a user may generate posts, in association with a user account, that include information associated with various data types and/or data formats. In some implementations, classification platform 220 may receive information associated with a large number of user accounts associated with users that are to be classified (e.g., hundreds, thousands, millions, etc.).

In some implementations, classification platform 220 may receive, from user device 210, information that identifies the information associated with the set of users and/or a memory location at which the information associated with the set of users is stored. Additionally, or alternatively, classification platform 220 may perform a technique (e.g., a web crawling technique, a web scraping technique, a data mining technique, a web searching technique, a database searching technique, or the like), and receive information, associated with the set of users, to be processed based on the technique. As an example, classification platform 220 may receive information that identifies a resource identifier, and obtain information to be processed based on the resource identifier (e.g., may access a resource using the resource identifier, may request a resource using the resource identifier, or the like).

In some implementations, classification platform 220 may correlate the information, associated with the set of users, and metadata (e.g., temporal information, location information, etc.). In some implementations, the information, associated with the set of users, may include one or more temporal indicators. For example, a temporal indicator may indicate a time, a date, a time frame, a time interval, a time period, or the like (e.g., a timestamp, or the like).

In some implementations, a temporal indicator may indicate when the information was created, modified, or the like. For example, a temporal indicator may include a date and/or a time associated with the information (e.g., 30-June-2013), and/or may indicate that the information is pertinent to a particular time and/or date. Additionally, or alternatively, a temporal indicator may identify a time period associated with the information (e.g., Quarter 1 (Q1) 2015 or simply 2015).

Additionally, or alternatively, the information, associated with the set of users, may include location information. For example, the information may include one or more location indicators, such as information that identifies a geographic location associated with a computing device that generated the information, or the like.

In this way, classification platform 220 may correlate the information, associated with the set of users, and metadata, which may enable classification platform 220 to classify users based on a particular time frame and/or a particular location, as described elsewhere herein.

As further shown in Fig. 4, process 400 may include standardizing the information associated with the set of users (block 420). For example, classification platform 220 may standardize the information, associated with the set of users, based on receiving the information associated with the set of users. In some implementations, classification platform 220 may standardize the information to prepare the information for processing. As an example, classification platform 220 may standardize information associated with different file types and/or different formats, such that the information is represented in association with a particular file type and/or particular format.

In some implementations, classification platform 220 may identify a file type and/or format associated with the information, and determine a technique to standardize the information based on the file type and/or format. For example, classification platform 220 may implement a text parsing technique, an object recognition technique, an image processing technique, an audio conversion technique, a video captioning technique, or the like, based on a file type and/or format of the information.

In some implementations, classification platform 220 may standardize the information such that the information includes a common format of data, such as text. For example, assume that classification platform 220 receives information associated with a user based on a user account (e.g., social media posts). In this case, classification platform 220 may receive text information, audio information, image information, video information, or the like. As examples, a user may post text information, audio information, video information, etc., in association with the user account. For example, assume that a user posts an image of a military vehicle, such as a tank. In this case, and as a particular example, classification platform 220 may perform an image processing technique, identify objects associated with the image (e.g., the tank), and add the term "tank" to a term corpus (e.g., a corpus of terms extracted from the information associated with the user).

In some implementations, classification platform 220 may prepare the text for processing by adjusting characters in the text, such as by removing characters, replacing characters, adding characters, adjusting a font, adjusting formatting, adjusting spacing, removing white space, or the like. For example, classification platform 220 may replace multiple spaces with a single space, insert a space after a left parenthesis, a left brace, a left bracket, etc., and/or insert a space before a right parenthesis, a right brace, a right bracket, etc. In this way, classification platform 220 may use a space delimiter to more easily parse the text, thereby conserving processor and/or memory resources of classification platform 220. In some implementations, classification platform 220 may further prepare the text for processing by expanding acronyms in the text, determining terms in the text (e.g., by determining characters identified by one or more delimiting characters), associating part-of-speech tags (POS tags) with terms in the text, or the like.

As further shown in Fig. 4, process 400 may include identifying a set of entities based on the standardized information (block 430). For example, classification platform 220 may identify a set of entities based on the standardized information. In some implementations, an entity may include an individual, an object, a location, an organization, a concept, or the like. In some implementations, classification platform 220 may identify an entity associated with a term. That is, a term may identify an entity.

In some implementations, classification platform 220 may generate a corpus of terms (e.g., a term corpus) by generating a data structure that stores terms extracted from the text (e.g., the standardized information). A term may refer to a set of characters, such as a single character, multiple characters (e.g., a character string), a combination of characters that form multiple words (e.g., a multi-word term, such as a phrase, a sentence, or a paragraph), a combination of characters that form an acronym, a combination of characters that form an abbreviation of a word, a combination of characters that form a misspelled word, or the like. By generating the data structure that stores terms extracted from the text, classification platform 220 may process the text more efficiently than if the text were processed without first generating the data structure, thereby conserving processor and memory resources.

In some implementations, classification platform 220 may identify an entity based on a term included in the term corpus. In some implementations, classification platform 220 may identify terms that are associated with particular POS tags (e.g., nouns, proper nouns, etc.), and identify the set of entities based on the terms that include the particular POS tags.

In some implementations, classification platform 220 may receive information that identifies particular terms to be used to perform entity identification (e.g., a classification corpus). For example, classification platform 220 may identify terms that are associated with the classification corpus, and compare the terms associated with the classification corpus and terms associated with the term corpus. As an example, classification platform 220 may determine that a term, included in the term corpus, matches a term included in the classification corpus, and identify an entity based on the match (e.g., an entity identified by the terms).

Additionally, or alternatively, classification platform 220 may implement a technique, such as an information weighting technique, an information retrieval technique, a text mining technique, or the like, to identify particular entities based on the terms. For example, classification platform 220 may determine term frequency-inverse document frequency (tf-idf) scores for the terms, and identify entities based on terms that include particular tf-idf scores (e.g., tf-idf scores that satisfy a threshold, a top set of tf-idf scores, or the like). As an example, the tf-idf score for a term may indicate a measure of relative importance of the term as compared to other terms.

In some implementations, classification platform 220 may identify a set of entities based on information associated with a user. In other words, classification platform 220 may process information (e.g., audio files, text files, video files, etc.) that was generated by a user, and identify a set of entities that are associated with the information. In some implementations, classification platform 220 may identify a set of entities that are included in a particular data point associated with a user (e.g., a particular social media post, a particular video file, a particular audio file, or the like). Additionally, or alternatively, classification platform 220 may identify a set of entities that are included in a data set associated with a user (e.g., a set of data points, such as a set of social media posts, a set of audio files, a set of video files, or the like). In some implementations, classification platform 220 may identify a set of entities for a set of users, and perform entity resolution, as described below.

As further shown in Fig. 4, process 400 may include performing entity resolution based on identifying the set of entities (block 440). For example, classification platform 220 may perform a technique to resolve entities based on identifying the set of entities (e.g., an entity resolution technique, a record-linkage technique, an entity linking technique, a deterministic record linkage technique, or the like). In some implementations, entity resolution may refer to the process of analyzing information associated with entities, relating entities from multiple sources of data, and determining which entities are the same entities. In other words, entity resolution may refer to the process of identifying data points, within a data set, that refer to the same entity.

As an example, assume that multiple users generated social media posts that include the term "tank." In this case, some users may be referring to a military vehicle, whereas other users may be referring to a container. Continuing the example, classification platform 220 may resolve, for each user, the entity "tank" to determine which users are referring to the same entity (e.g., a military vehicle).

In some implementations, classification platform 220 may perform entity resolution by comparing entities and terms associated with an external data structure, such as a data structure associated with external server 230 and/or database server 240 (e.g., an external database, a knowledge graph, external information sources, or the like). In some implementations, classification platform 220 may perform entity resolution based on context independent features. For example, classification platform 220 may resolve entities based on a similarity between terms (e.g., identifying the entity) and terms associated with the external data structure. As examples, classification platform 220 may resolve an entity based on a Levenshtein distance, a phonetic distance, a tf-idf score, or the like, associated with a term that identifies the entity (e.g., as compared to another term associated with the external data structure).

Additionally, or alternatively, classification platform 220 may perform entity resolution based on context dependent features. As a particular example, assume that an image includes multiple objects (e.g., a solider, a gun, and a tank). In this case, classification platform 220 may resolve the entity "tank" as referencing a military vehicle, rather than referencing a container, based on resolving other entities associated with the image (e.g., solider, gun, etc.). That is, classification platform 220 may identify (e.g., infer) a context associated with the image, and may resolve entities associated with the image based on the context.

As further shown in Fig. 4, process 400 may include generating a graph data structure based on performing entity resolution (block 450). For example, classification platform 220 may generate a graph data structure based on performing entity resolution. In some implementations, a graph data structure (e.g., herein also referred to as a "graph") may refer to a data structure that represents data in a graph format (e.g., a knowledge graph, a graph database, a knowledge base, or the like).

In some implementations, the graph may include a set of nodes and a set of edges that are associated with the set of nodes. For example, the set of nodes may correspond to entities, and the set of edges may correspond to relationships between nodes. As an example, a first node (e.g., "tank") and a second node (e.g., "vehicle") may include an edge (e.g., "is a") that identifies a relationship between the first node and the second node (e.g., a tank is a vehicle).

In some implementations, classification platform 220 may identify entities based on information associated with the set of users, and generate a graph based on identifying and resolving the entities. In some implementations, classification platform 220 may perform a search using a search engine, a graph database, external data structures, or the like, to resolve entities and/or identify relationships between the identified and resolved entities, and may generate a graph based on performing the search(es).

In some implementations, classification platform 220 may generate a graph based on multiple data sets associated with a set of users. For example, classification platform 220 may generate a graph based on social media posts associated with a set of users (e.g., each user that is to be classified).

In some implementations, classification platform 220 may generate multiple graphs (e.g., subset graphs of a graph that includes data associated with multiple users, or the like). In some implementations, classification platform 220 may generate a graph that corresponds to data associated with a particular user. As an example, classification platform 220 may generate a graph based on social media posts associated with a particular user (e.g., based on entities extracted from the social media posts of the particular user).

Additionally, or alternatively, classification platform 220 may generate a graph that corresponds to data associated with a particular time frame. For example, classification platform 220 may generate a graph based on social media posts, associated with a set of users, that include temporal indicators that identify a time frame. Additionally, or alternatively, classification platform 220 may generate a graph based on data associated with a particular user for a particular time frame. For example, classification platform 220 may generate a graph based on social media posts, associated with a particular user, that include temporal indicators that identify the time frame. While implementations herein describe graphs being generated based on particular data (e.g., social media posts), other implementations include generating graphs based on other types of data, such as emails, texts, or the like. In this way, classification platform 220 may generate graphs, and classify users based on the graphs, as described elsewhere herein.

As further shown in Fig. 4, process 400 may include receiving information that identifies a relationship between a first entity, of the set of entities, and a second entity of the set of entities (block 460), and generating a modified graph data structure based on the information that identifies the relationship between the first entity and the second entity (block 470). For example, classification platform 220 may receive information that identifies a relationship between a first entity and a second entity, and generate a modified graph based on the information that identifies the relationship between the first entity and the second entity.

In some implementations, classification platform 220 may receive, from user device 210 (e.g., which may have received an input from a user), information that identifies a relationship between a first entity and a second entity (e.g., a first node and a second node of a graph). In some implementations, classification platform 220 may receive, from a data store, information that identifies a relationship between a first entity and a second entity, and may store a similarity score and/or a classification score in the data store, as described elsewhere herein.

In some implementations, classification platform 220 may generate a modified graph based on adding an edge between nodes of a graph. As an example, assume that a graph includes a first node (e.g., "person"), a second node (e.g., "military profile"), a third node (e.g., "combatants"), a fourth node (e.g., "assault"), and various edges that associate the respective nodes. Continuing the example, assume that the information that identifies the relationship between the entities includes "persons having military profiles are recruiting combatants with the objective of an assault." Further, assume that the original graph did not include an edge between the second node (e.g., "military profile") and the fourth node (e.g., "assault"). In this case, classification platform 220 may generate the modified graph based on adding an edge between the second node and the fourth node (e.g., military profiles are associated with an assault).

In this way, classification platform 220 may generate a modified graph that may be used to more accurately classify a user than as compared to a situation where the graph is not modified, thereby conserving processor and/or memory resources of devices that may be used to ascertain more information regarding a user that is inaccurately classified, perform actions associated with inaccurately classified users, or the like.

In some implementations, classification platform 220 may add an edge between nodes of the graph based on the graph including the nodes and based on an edge not existing between the nodes. Alternatively, classification platform 220 may add an edge between nodes of the graph based on the graph including the nodes and based on another edge existing between the nodes. Additionally, or alternatively, classification platform 220 may add an edge between nodes of the graph based on the relationship not being contradictory to an already existing relationship. For example, assume that the graph includes a first node (e.g., "tank"), a second node (e.g., "vehicle"), and an edge identifying the relationship (e.g., "is a") between the first node and the second node. Continuing the example, assume that classification platform 220 receives information identifying a relationship (e.g., "is a") between the entity (e.g., "tank") and a third node (e.g., "person"). In this case, classification platform 220 may prevent an edge from being added to the graph based on the relationship being contradictory to an already existing relationship.

In this way, classification platform 220 may receive information that identifies a relationship between entities, and generate the modified graph based on adding edges between nodes that correspond to the entities. Additionally, in this way, classification platform 220 may generate a modified graph that enables users to be classified in a more accurate manner, as described elsewhere herein.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

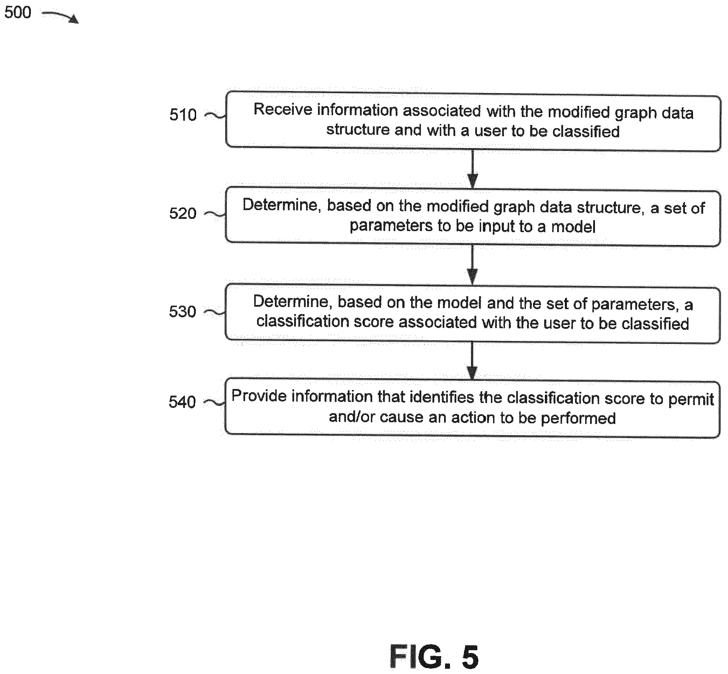

Fig. 5 is a flow chart of an example process 500 for determining a classification score for a user based on a model. In some implementations, one or more process blocks of Fig. 5 may be performed by classification platform 220. In some implementations, one or more process blocks of Fig. 5 may be performed by another device or a group of devices separate from or including classification platform 220, such as user device 210, external server 230, and/or database server 240.

As shown in Fig. 5, process 500 may include receiving information associated with the modified graph data structure and with a user to be classified (block 510). For example, classification platform 220 may receive information associated with the modified graph and with a user to be classified. As described elsewhere herein, the modified graph may be based on information associated with the set of users (e.g., hundreds of users, thousands of users, millions of users, etc.).

In some implementations, classification platform 220 may generate multiple graphs based on the modified graph. For example, classification platform 220 may generate a graph that corresponds to information associated with a particular user (e.g., all social media posts of the user), a graph that corresponds to information associated with the particular user and a time frame (e.g., social media posts associated with a particular day, a particular social media post, or the like). That is, classification platform 220 may generate a set of graphs that correspond to respective users (e.g., hundreds of sub-graphs, thousands of sub-graphs, millions of sub-graphs, etc.).

Additionally, or alternatively, classification platform 220 may generate a graph that corresponds to a set of classified users (e.g., users that are associated with a known classification). In this way, classification platform 220 may compare a graph, associated with the user to be classified, and a graph associated with a set of classified users, and determine a classification score of the user, as described elsewhere herein.

As further shown in Fig. 5, process 500 may include determining, based on the modified graph data structure, a set of parameters to be input to a model (block 520). For example, classification platform 220 may determine, based on the modified graph, a set of parameters to be input to a model that may be used to determine a classification score of the user. In some implementations, a classification score may be indicative of the user being associated with a particular classification (or not being associated with the classification). For example, users that are associated with classification scores that satisfy a threshold may be associated with a particular classification, whereas users that are associated with classification scores that do not satisfy the threshold may not be associated with the particular classification.

In some implementations, classification platform 220 may use machine learning techniques to analyze data (e.g., training data, such as historical data, data associated with classified users, etc.) and create models. The machine learning techniques may include, for example, supervised and/or unsupervised techniques, such as artificial networks, Bayesian statistics, learning automata, Hidden Markov Modeling, linear classifiers, quadratic classifiers, decision trees, association rule learning, or the like.

In some implementations, classification platform 220 may use another kind of computer-implemented technique, such as artificial intelligence, machine perception, or computer vision, to analyze data and determine classifications. In some implementations, classification platform 220 may receive information that identifies a set of classified users (e.g., users having a known classification) and information associated with the set of classified users. Additionally, classification platform 220 may generate a model based on the known classification and the known information.

In some implementations, classification platform 220 may create a model using information associated with a first set of users, and use the model in association with information relating to a second set of users. Additionally, or alternatively, classification platform 220 may receive, based on classifying a set of users, additional information that identifies known classifications of the set of users, and may update the model based on the additional information.

In some implementations, the set of parameters may include a parameter that corresponds to the existence of a set of nodes and/or edges associated with a graph that corresponds to the user to be classified. For example, classification platform 220 may generate a graph for the user to be classified, and determine whether the graph includes a particular set of nodes and/or edges, a threshold number of nodes and/or edges, or the like.

In some implementations, the particular set of nodes and/or edges may correspond to a node and/or edge that was added as described above in connection with blocks 460 and 470 of Fig. 4. In some implementations, if the graph of the user to be classified includes the particular set of nodes and/or edges, then classification platform 220 may assign a particular parameter value (e.g., a parameter value identifying the existence of the set of nodes and/or edges). Alternatively, if the graph does not include the set of nodes and/or edges, then classification platform 220 may assign another parameter value (e.g., identifying the non-existence of the set of nodes and/or edges).

Additionally, or alternatively, classification platform 220 may compare a graph, associated with the user to be classified, and a graph associated with the set of classified users, and identify a number of common nodes and/or edges. As an example, graphs that share a greater number of common nodes and/or edges may indicate underlying users being associated with a similar classification. Additionally, or alternatively, classification platform 220 may determine a parameter value based on the number of common nodes and/or edges, based on the number of common nodes and/or edges satisfying a threshold, or the like.

In some implementations, the set of parameters may include a similarity score that identifies a similarity between information, associated with the user to be classified, and information associated with the set of classified users. In some implementations, classification platform 220 may determine a similarity score based on performing a topic modeling technique (e.g., a natural language processing technique, an explicit semantic analysis technique, a latent semantic analysis technique, a latent Dirichlet allocation technique, a non-negative matrix factorization technique, a probabilistic latent semantic indexing technique, a probabilistic latent semantic analysis technique, a text mining technique, or the like).

For example, a topic model may include a model that is used to identify topics associated with data. A topic may refer to a set of terms that share a common characteristic, trait, property, or the like. In other words, information that includes a set of terms may include a set of topics associated with the set of terms. In some implementations, the topic model may determine a topic probability associated with the information. For example, a topic probability may identify the probability of particular information being associated with the particular topic.

In some implementations, the topic model may identify a topic associated with a topic probability based on a number of terms that are associated with the topic, and that are included in particular information (e.g., a data set). As an example, assume that a data set includes a greater number of terms associated with a first topic than as compared to a number of terms associated with a second topic. In this case, the topic model may identify a first topic probability associated with a first topic that is greater than a second topic probability associated with the second topic.

In some implementations, classification platform 220 may use a topic model to identify a topic distribution (e.g., a set of topic probabilities) of topics included in a data set. Additionally, or alternatively, classification platform 220 may represent the topic distribution as a vector, a matrix, an array, or the like. In some implementations, classification platform 220 may determine a similarity score, between data sets, based on comparing topic distributions of the data sets (e.g., may compare vectors, or the like). For example, classification platform 220 may determine the similarity score based on a hamming distance value, a Damerau-Levenshtein distance value, a Euclidean distance value, a Mahalanobis distance value, a Sørensen-Dice coefficient value, or the like.

As a particular example, classification platform 220 may determine a similarity score based on the following sets of equations:

$$ L'(C) = \sum_{i=1}^{N} \sum_{j=1}^{M} n(d_i, w_j) \log \sum_{k=1}^{K} P(w_j | z_k) P_E(z_k | d_i) $$

For example, classification platform 220 may use the above loss function equation in association with an expectation-maximization (EM) algorithm to identify topic model parameters $P(w_j|z_k)$ and $P_E(z_k|d_i)$. In some implementations, $P(w_j|z_k)$ may refer to the probability of a term ($w_j$) for a topic ($z_k$). Additionally, $P_E(z_k|d_i)$ may refer to the probability of a topic ($z_k$) for a data point ($d_i$). A data set ($C$) may include a set of data points (e.g., $d_1$, $d_2$, ..., $d_n$), where the data points include a set of terms (e.g., $w_1$, $w_2$, ..., $w_m$). As an example, classification platform 220 may use an EM algorithm in association with the above equation to determine a maximum probability of the topic model parameters in association with the collection ($C$).

In some implementations, classification platform 220 may determine a topic probability $P(z_k|e)$ of an entity using the following equation:

$$ P(z_k|e) = \frac{1}{2} \left( \sum \frac{P(z_k|d_i)}{|D_e|} + \sum_{e_j \in C_e} P(z_k|e_j) P(e_j|e) \right) $$

Additionally, $P(z_k|d_i)$ may refer to the probability of a topic ($z_k$) for a data point ($d_i$). Further, $|D_e|$ may refer to a data set that includes the entity $e$. Further still, $P(z_k|e_j)$ may refer to a topic probability of an entity $e_j$. In some implementations, classification platform 220 may estimate $P(z_k|e_j)$ in a similar manner as described above in connection with $P_E(z_k|d_i)$ using an EM algorithm. In some implementations, $C_e$ may refer to the set of entities that share an edge with the entity $e$. Additionally, $P(e_j|e)$ may refer to a weight value between the entity $e_j$ and the entity $e$. For example, a weight value may identify the semantic relatedness of the nodes (e.g., entities).

In some implementations, classification platform 220 may determine a topic probability of a topic $P_E(z_k|d)$ for a data set using the following equation:

$$ P_E(z_k|d) = \sum P(z_n|d) + (1 - \xi) \sum_{e \in E_d} \frac{p(z_k|e)}{|E_d|} $$

For example, $E_d$ may refer to the set of entities of the data set. Additionally, $P(z_n|d)$ may refer to a set of probabilities (e.g., for topics $z_1$ through $z_n$). Further, $\xi$ may refer to an adjustable parameter. Further still, $P(z_k|e)$ may refer to a topic probability of an entity $e$, and $E_d$ may refer to the set of entities of a data point $d$.

While the above equations are provided as examples, it should be understood that classification platform 220 may implement other techniques to determine topic probabilities and/or similarity scores.

In some implementations, classification platform 220 may determine a similarity score based on performing a comparison between graphs. For example, classification platform 220 may compare a graph, generated based on information associated with a user to be classified, and a graph that was generated based on information associated with a set of classified users. Additionally, or alternatively, classification platform 220 may determine a number of common nodes between the graphs, a number of common edges between the graphs, or the like. Additionally, or alternatively, classification platform 220 may determine a similarity score based on the number of common nodes and/or edges, based on the number of common nodes and/or edges satisfying a threshold, or the like.

In some implementations, the set of parameters may include a parameter that corresponds to a similarity score that identifies a similarity between information, associated with the user to be classified, and information associated with a set of classified users. As a particular example, classification platform 220 may determine a similarity score based on a social media post, of the user to be classified, and a set of social media posts associated with the set of classified users. Continuing the example, classification platform 220 may generate a first graph based on the social media of the user to be classified, generate a second graph based on the set of social media posts associated with the set of classified users, and determine the similarity score based on the first graph and the second graph (e.g., using a technique as described above).

As another particular example, classification platform 220 may determine the similarity score based on a set of social media posts, of the user to be classified, and a set of social media posts associated with classified users. As yet another particular example, classification platform 220 may determine the similarity score based on a set of social media posts, associated with the user to be classified and a particular time frame and/or location, and a set of social media posts associated with the set of classified users and the particular time frame and/or location.

In some implementations, the set of parameters may include a parameter that corresponds to a similarity score that identifies a similarity between information associated with the user to be classified, and information associated with a set of other users (e.g., users associated with a first classification, users associated with a second classification, unclassified users, or the like). As a particular example, classification platform 220 may determine the similarity score based on a social media post, of the user to be classified, and social media posts associated with other users (e.g., all users for which data is available). In this way, classification platform 220 may reduce a number of false positives, such as situations where a user is inaccurately classified, by determining a similarity score based on information associated with multiple users (e.g., classified users, unclassified users, etc.). For example, if a social media post, of the user to be classified, is associated with a similarity score that indicates a high similarity to that of social media posts of multiple classifications of users, then the social media post of the user to be classified may not be indicative as to a particular classification of the user (e.g., may not be used to accurately classify the user).

In some implementations, the set of parameters may include a parameter that corresponds to an alignment score between an entity, associated with information of a user to be classified, and an entity associated with information associated with a set of classified users. In some implementations, an alignment score may indicate a similarity between an entity (e.g., a term extracted from the information associated with the user to be classified) and an entity associated with a graph associated with the set of classified users.

In some implementations, classification platform 220 may determine an alignment score for each entity included in the information associated with the user to be classified. As an example, assume that a social media post, of the user to be classified, includes five entities (e.g., five terms that were identified and/or resolved as described elsewhere herein). In this case, classification platform 220 may determine five alignment scores based on the five terms. In practice, classification platform 220 may determine numerous (e.g., hundreds, thousands, etc.) alignment scores based on numerous (e.g., hundreds, thousands, etc.) entities associated with information of the user to be classified.

In some implementations, classification platform 220 may identify an entity, included in the information associated with the user to be classified, and determine if the entity is included in a graph associated with the set of classified users. If the entity is included in the graph associated with the set of classified users, then classification platform 220 may assign a particular alignment score.

Alternatively, if the entity is not included in the graph associated with the set of classified users, then classification platform 220 may identify a related entity that is included in the graph associated with the set of classified users. For example, classification platform 220 may determine, based on performing a search using an external information source, a related entity (e.g., a synonym of the entity, or the like) that is included in the graph associated with the set of classified users.

Additionally, or alternatively, classification platform 220 may identify a first node, included in the graph associated with the user to be classified, that corresponds to the entity, and identify a second node, included in the graph associated with the set of classified users that corresponds to the related entity. Additionally, or alternatively, classification platform 220 may determine a number of edges that are common to the first node and the second node.

Additionally, or alternatively, classification platform 220 may determine the alignment score based on the number of edges that are common. For example, if the first node and the second node include a greater number of common edges, then classification platform 220 may associate the entity and the related entity with a greater alignment score than as compared to situations where the first node and the second node share fewer common edges.

As a particular example, assume that the entity is "war," and that the entity is not included in the graph associated with the set of classified users. In this case, classification platform 220 may identify a related entity (e.g., "battle") that is included in the graph associated with the set of classified users and determine a number of common edges that the entities (e.g., nodes associated with the respective entities) share. In some implementations, if classification platform 220 determines multiple related entities for an entity, then classification platform 220 may determine multiple alignment scores and may use the greatest alignment score, the median alignment score, or the like.

As further shown in Fig. 5, process 500 may include determining, based on the model and the set of parameters, a classification score associated with the user to be classified (block 530). For example, classification platform 220 may determine, based on the model and the set of parameters, a classification score associated with the user to be classified. In some implementations, the classification score may be indicative of the user being associated with a particular classification (e.g., a confidence score, or the like). For example, a classification score that satisfies a threshold may indicate that the user is associated with the classification (e.g., may indicate a likelihood that the user is associated with the classification).

In some implementations, classification platform 220 may determine the classification score based on inputting the set of parameters into the model. In some implementations, classification platform 220 may determine a set of classification scores, for a user to be classified, based on different models associated with different classifications (e.g., trained using data associated with users corresponding to the respective classifications). Additionally, or alternatively, classification platform 220 may classify a user based on the greatest classification score, based on a threshold number of classification scores satisfying a threshold, or the like.

As further shown in Fig. 5, process 500 may include providing information that identifies the classification score to permit and/or cause an action to be performed (block 540). For example, classification platform 220 may provide information that identifies the classification score to permit and/or cause an action to be performed. Additionally, or alternatively, classification platform 220 may provide information that identifies the similarity score to permit and/or cause an action to be performed. That is, classification platform 220 may permit and/or cause an action to be performed based on a similarity score. In some implementations, classification platform 220 may store the classification score and/or the similarity score in a data store that is associated with information that identifies the relationship between entities.

In some implementations, classification platform 220 may perform the action automatically. Additionally, or alternatively, classification platform 220 may perform the action based on additional input and/or confirmation, such as from an operator of user device 210. As an example of an action that may be performed based on the classification score, classification platform 220 may automatically transmit messages (e.g., email messages, short message service (SMS) messages, or the like) to user devices 210 (e.g., associated with particular operators, such as operators associated with a particular agency, department, or the like).

As another example, classification platform 220 may cause an emergency message to be broadcast by transmitting a command and/or a message to an emergency notification system. As another example, classification platform 220 may cause pedestrian traffic or vehicle traffic to be rerouted (e.g., by causing announcements to be made via navigation systems, messages to be displayed via electronic signs, etc.). As another example, classification platform 220 may cause evacuation or removal of personnel from an area (e.g., by causing announcements to be made via an intercommunication system, messages to be displayed via electronic signs, etc.). As another example, classification platform 220 may cause a vehicle, such as an unmanned aerial vehicle (UAV), or a robot to be deployed to a particular location associated with the user (e.g., to gather additional information associated with the user). As an example, assume that a user, that is associated with a particular classification score, is generating content involving a particular location, is generating content in association with a particular location, or the like. In this case, a UAV may be deployed to conduct further reconnaissance (e.g., capture imagery, identify activity associated with the location, or the like).

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

In some implementations, processes 400 and 500 may be performed independently. Alternatively, processes 400 and 500 may be performed dependently, concurrently, serially, and/or in parallel. In some implementations, processes 400 and/or 500 may be performed by one or more devices of Fig. 2. Additionally, or alternatively, processes 400 and/or 500 may be performed by a single device or by multiple different devices.

Implementations described herein provide a classification platform that automatically classifies users. The classification platform may receive user information, standardize the information, and identify a set of entities based on the standardized information.

The classification platform may generate a graph data structure having nodes that correspond to the entities, receive relationship information identifying a relationship between particular entities, and generate a modified graph data structure based on the relationship. Additionally, the classification platform may determine a set of parameters based on the modified graph data structure, input the parameters to a model to classify a user, determine a classification score associated with the user, and provide information that identifies the classification score to cause an action to be performed.

In this way, the classification platform automatically classifies a potentially large number of users in a timely and efficient manner, thereby conserving resources such as processing resources, memory resources, and/or other resources associated with determining the classification score and/or performing the action.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

Certain user interfaces have been described herein and/or shown in the figures. A user interface may include a graphical user interface, a non-graphical user interface, a text-based user interface, etc. A user interface may provide information for display. In some implementations, a user may interact with the information, such as by providing input via an input component of a device that provides the user interface for display. In some implementations, a user interface may be configurable by a device and/or a user (e.g., a user may change the size of the user interface, information provided via the user interface, a position of information provided via the user interface, etc.). Additionally, or alternatively, a user interface may be pre-configured to a standard configuration, a specific configuration based on a type of device on which the user interface is displayed, and/or a set of configurations based on capabilities and/or specifications associated with a device on which the user interface is displayed.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

The present disclosure also relates to the following items:

Item 1: A device, comprising:

one or more processors to:

receive information associated with a user that is to be classified,
the information being associated with multiple data formats;

identify a set of entities based on the information associated with the user that is to be classified,

a first subset of entities, of the set of entities, being identified in information associated with a first data format of the multiple data formats, and
a second subset of entities, of the set of entities, being identified in information associated with a second data format of the multiple data formats; generate a first graph data structure based on the set of entities, the first graph data structure including a set of nodes that correspond to the set of entities;

receive information that identifies a relationship between a first entity, of the set of entities, and a second entity of the set of entities;
add an edge between a first node, of the set of nodes, and a second node of the set of nodes based on the information that identifies the relationship,

the edge being associated with the relationship;

determine a similarity score associated with the first graph data structure and a second graph data structure based on adding the edge between the first node and the second node,

the first graph data structure being associated with the user to be classified, and
the second graph data structure being associated with another user; and provide information that identifies the similarity score between the user and the other user.

Item 2: The device of item 1, where the one or more processors are further to:

determine a classification score based on the similarity score and a model,

the classification score being indicative of the user, that is to be classified, being associated with a classification that is associated with a set of classified users; and

provide information that identifies the classification score to permit an action to be performed.

Item 3: The device of item 1, where the first data format is different than the second data format.

Item 4: The device of item 1, where the one or more processors are further to:

determine a first topic distribution based on the first graph data structure;
determine a second topic distribution based on the second graph data structure;
compare the first topic distribution and the second topic distribution; and
where the one or more processors, when determining the similarity score, are to:

determine the similarity score based on comparing the first topic distribution and the second topic distribution.

Item 5: The device of item 1, where the information associated with the user to be classified includes image information, video information, text information, and audio information.

Item 6: The device of item 1, where the one or more processors are further to:

perform an entity resolution technique based on the set of entities; and
where the one or more processors, when generating the first graph data structure, are to:

generate the first graph data structure based on performing the entity resolution technique.

Item 7: The device of item 1, where the one or more processors are further to:

standardize the information associated with the user to be classified in association with the first data format of the multiple data formats; and
where the one or more processors, when identifying the set of entities, are to:

identify the set of entities based on the information being standardized in association with the first data format of the multiple data formats.

Item 8: The device of item 1, where the one or more processors are further to:

convert the information, that is associated with the multiple data formats, to the first data format; and
where the one or more processors, when identifying the set of entities, are to:

identify the set of entities based on converting the information to the first data format.

Item 9: The device of item 1, where the first data format is text information format.

Item 10: A method, comprising:

receiving, by a device, information associated with a user that is to be classified,

the information being associated with multiple data formats;

identifying, by the device, a set of entities based on the information associated with the user that is to be classified;
generating, by the device, a first graph data structure based on the set of entities,

the first graph data structure including a set of nodes that correspond to the set of entities;

receiving, by the device, information that identifies a relationship between a first entity, of the set of entities, and a second entity of the set of entities;
adding, by the device, an edge between a first node, of the set of nodes, and a second node of the set of nodes based on the information that identifies the relationship;
determining, by the device, a similarity score associated with the first graph data structure and a second graph data structure based on adding the edge between the first node and the second node; and
providing, by the device, information that identifies the similarity score.

Item 11: The method of item 10, further comprising:

identifying a time frame associated with the information that is associated with the user to be classified;
identifying information, associated with a set of classified users, that is associated with the time frame;
generating the second graph data structure based on the information, associated with the set of classified users, that is associated with the time frame; and
where determining the similarity score associated with the first graph data structure and the second graph data structure comprises:

determining the similarity score based on generating the second graph data structure.

Item 12: The method of item 10, further comprising:

performing a first data processing technique based on a first subset of the information associated with the user to be classified,

the first subset being associated with a first data format of the multiple data formats;

performing a second data processing technique based on a second subset of the information associated with the user to be classified,

the second subset being associated with a second data format, of the multiple data formats, that is different than the first data format; and

where identifying the set of entities comprises:

identifying the set of entities based on performing the first data processing technique and the second data processing technique.

Item 13: The method of item 10, further comprising:

determining, based on a topic model, a first topic distribution associated with the first graph data structure;
determining, based on the topic model, a second topic distribution associated with the second graph data structure; and
where determining the similarity score comprises:

determining the similarity score based on the first topic distribution and the second topic distribution.

Item 14: The method of item 10, further comprising:

identifying a time frame associated with the information that is associated with the user; and

where determining the similarity score comprises:

determining the similarity score based on the time frame.

Item 15: The method of item 10, where the information that identifies the relationship between the first entity, of the set of entities, and the second entity of the set of entities is received from a data store; and

where the method further comprises:

storing the similarity score in the data store.

Item 16: The method of item 10, further comprising:

determining that the relationship does not contradict another relationship,

the other relationship being associated with another edge and the first node; and where adding the edge between the first node and the second node comprises:

adding the edge based on determining that the relationship does not contradict the other relationship.

Item 17: A non-transitory computer-readable medium storing instructions, the instructions comprising:

one or more instructions that, when executed by one or more processors, cause the one or more processors to:

receive information associated with a user that is to be classified,

the information being associated with multiple data formats;

identify a set of entities based on the information associated with the user that is to be classified; generate a first graph data structure based on the set of entities,

the first graph data structure including a set of nodes that correspond to the set of entities;

determine a similarity score associated with the first graph data structure and a second graph data structure,

the second graph data structure being associated with a set of classified users; and

provide information that identifies the similarity score to permit and/or cause an action to be performed.

Item 18: The non-transitory computer-readable medium of item 17, where the one or more instructions, when executed by the one or more processors, further cause the one or more processors to:

determine another similarity score associated with the first graph data structure and a third graph data structure, the third graph data structure being associated with a set of other classified users, the set of other classified users being associated with a first classification that is different than a second classification associated with the set of classified users; determine a classification score based on the similarity score and the other similarity score; and provide information that identifies the classification score.

Item 19: The non-transitory computer-readable medium of item 17, where the one or more instructions, when executed by the one or more processors, further cause the one or more processors to:

determine a first topic distribution based on the first graph data structure; determine a second topic distribution based on the second graph data structure; and where the one or more instructions, that cause the one or more processors to determine the similarity score, cause the one or more processors to:

determine the similarity score based on the first topic distribution and the second topic distribution.

Item 20: The non-transitory computer-readable medium of item 17, where the one or more instructions, when executed by the one or more processors, further cause the one or more processors to:

convert the information, associated with the user to be classified, into a data format of the multiple data formats; and

where the one or more instructions, that cause the one or more processors to identify the set of entities, cause the one or more processors to:

identify the set of entities based on converting the information into the data format.

**Claims**

1. A device, comprising:

one or more processors to:

receive information associated with a user that is to be classified,

the information being associated with multiple data formats;

identify a set of entities based on the information associated with the user that is to be classified,

a first subset of entities, of the set of entities, being identified in information associated with a first data format of the multiple data formats, and
a second subset of entities, of the set of entities, being identified in information associated with a second data format of the multiple data formats;

generate a first graph data structure based on the set of entities,

the first graph data structure including a set of nodes that correspond to the set of entities;

receive information that identifies a relationship between a first entity, of the set of entities, and a second entity of the set of entities;
add an edge between a first node, of the set of nodes, and a second node of the set of nodes based on the information that identifies the relationship,

the edge being associated with the relationship;

determine a similarity score associated with the first graph data structure and a second graph data structure based on adding the edge between the first node and the second node,

the first graph data structure being associated with the user to be classified, and
the second graph data structure being associated with another user; and

provide information that identifies the similarity score between the user and the other user.

2. The device of claim 1, where the one or more processors are further to:

determine a classification score based on the similarity score and a model,

the classification score being indicative of the user, that is to be classified, being associated with a classification that is associated with a set of classified users; and

provide information that identifies the classification score to permit an action to be performed.

3. The device of any one of the preceding claims, where the first data format is different than the second data format.

4. The device of any one of the preceding claims, where the one or more processors are further to:

determine a first topic distribution based on the first graph data structure;
determine a second topic distribution based on the second graph data structure;
compare the first topic distribution and the second topic distribution; and
where the one or more processors, when determining the similarity score, are to:

determine the similarity score based on comparing the first topic distribution and the second topic distribution.

5. The device of any one of the preceding claims, where the information associated with the user to be classified includes image information, video information, text information, and audio information.

6. The device of any one of the preceding claims, where the one or more processors are further to:

perform an entity resolution technique based on the set of entities; and
where the one or more processors, when generating the first graph data structure, are to:

generate the first graph data structure based on performing the entity resolution technique.

7. The device of any one of the preceding claims, where the one or more processors are further to:

standardize the information associated with the user to be classified in association with the first data format of the multiple data formats; and
where the one or more processors, when identifying the set of entities, are to:

identify the set of entities based on the information being standardized in association with the first data format of the multiple data formats.

8. The device of any one of the preceding claims, where the one or more processors are further to:

convert the information, that is associated with the multiple data formats, to the first data format; and
where the one or more processors, when identifying the set of entities, are to:

identify the set of entities based on converting the information to the first data format.

9. A method, comprising:

receiving, by a device, information associated with a user that is to be classified,

the information being associated with multiple data formats;

identifying, by the device, a set of entities based on the information associated with the user that is to be classified;
generating, by the device, a first graph data structure based on the set of entities,

the first graph data structure including a set of nodes that correspond to the set of entities;

receiving, by the device, information that identifies a relationship between a first entity, of the set of entities, and a second entity of the set of entities;
adding, by the device, an edge between a first node, of the set of nodes, and a second node of the set of nodes based on the information that identifies the relationship;
determining, by the device, a similarity score associated with the first graph data structure and a second graph data structure based on adding the edge between the first node and the second node; and
providing, by the device, information that identifies the similarity score.

10. The method of claim 9, further comprising:

identifying a time frame associated with the information that is associated with the user to be classified;
identifying information, associated with a set of classified users, that is associated with the time frame;
generating the second graph data structure based on the information, associated with the set of classified users, that is associated with the time frame; and

where determining the similarity score associated with the first graph data structure and the second graph data structure comprises:

determining the similarity score based on generating the second graph data structure.

11. The method of claim 9 or 10, further comprising:

performing a first data processing technique based on a first subset of the information associated with the user to be classified,

the first subset being associated with a first data format of the multiple data formats;

performing a second data processing technique based on a second subset of the information associated with the user to be classified,

the second subset being associated with a second data format, of the multiple data formats, that is different than the first data format; and

where identifying the set of entities comprises:

identifying the set of entities based on performing the first data processing technique and the second data processing technique.

12. The method of any one of the preceding claims 9 to 11, further comprising:

determining, based on a topic model, a first topic distribution associated with the first graph data structure; determining, based on the topic model, a second topic distribution associated with the second graph data structure; and
where determining the similarity score comprises:

determining the similarity score based on the first topic distribution and the second topic distribution.

13. The method of any one of the preceding claims 9 to 12, further comprising:

identifying a time frame associated with the information that is associated with the user; and
where determining the similarity score comprises:

determining the similarity score based on the time frame.

14. The method of any one of the preceding claims 9 to 13, where the information that identifies the relationship between the first entity, of the set of entities, and the second entity of the set of entities is received from a data store; and where the method further comprises:

storing the similarity score in the data store.

15. The method of any one of the preceding claims 9 to 14, further comprising:

determining that the relationship does not contradict another relationship,

the other relationship being associated with another edge and the first node; and where adding the edge between the first node and the second node comprises:

adding the edge based on determining that the relationship does not contradict the other relationship.

EP 3 358 472 A1

FIG. 1A

FIG. 1B

EP 3 358 472 A1

FIG. 1C

FIG. 1D

100

**User**

is using

**Communication Means**

is contributing to

**Fight**

involves

**Assault**

associated with

**Weapons**

is a

**Text**

is a

**Video**

is a

**Tank**

is a

**Solider**

includes

includes

**Military Terms**

120
Generate a graph data structure based on performing entity resolution

Classification Platform

EP 3 358 472 A1

EP 3 358 472 A1

Users with the objective
of an assault are recruiting soldiers

Search

**125**
Receive information that
identifies a relationship
between a first entity and a
second entity of the set of
entities

Classification Platform

Operator    User Device

**FIG. 1E**

FIG. 1F

100

has objective

User

is using

Communication
Means

is
contributing to

is a          is a

Text          Video

includes        includes

includes

Military
Terms

Fight          involves          Assault

is associated
with

is recruiting

Weapon

is a          uses

Tank          Solider

Classification Platform

130
Generate a modified graph data structure
based on the information that identifies the
relationship between the first entity and the
second entity

EP 3 358 472 A1

FIG. 1G

Parameter 1 ——————→

Parameter 2 ——————→

Model ——————→ Classification Score

. . .

Parameter N ——————→

**140**
Determine, based on the model and the set of parameters, a classification score associated with the user to be classified

Classification Platform

# FIG. 1H

| User | Classification Score |
|------|---------------------|
| User 1 | 90 |
| User 2 | 35 |
| User 3 | 0 |
| . . . | . . . |
| User N | 80 |

UAV

Operator

User Device

Classification Platform

**145**
Provide information that identifies the classification score to permit and/or cause an action to be performed

**FIG. 1I**

EP 3 358 472 A1

FIG. 2

300

Processor

320

Memory

330

Storage
Component

340

Bus
310

Input
Component

350

Output
Component

360

Communication
Interface

370

**FIG. 3**

400 ⟶

410 ⟋ Receive information associated with a set of users that are to be classified

420 ⟋ Standardize the information associated with the set of users

430 ⟋ Identify a set of entities based on the standardized information

440 ⟋ Perform entity resolution based on identifying the set of entities

450 ⟋ Generate a graph data structure based on performing entity resolution

460 ⟋ Receive information that identifies a relationship between a first entity, of the set of entities, and a second entity of the set of entities

470 ⟋ Generate a modified graph data structure based on the information that identifies the relationship between the first entity and the second entity

**FIG. 4**

500

510 — Receive information associated with the modified graph data structure and with a user to be classified

520 — Determine, based on the modified graph data structure, a set of parameters to be input to a model

530 — Determine, based on the model and the set of parameters, a classification score associated with the user to be classified

540 — Provide information that identifies the classification score to permit and/or cause an action to be performed

**FIG. 5**

Europäisches
Patentamt

European
Patent Office

Office européen
des brevets

# EUROPEAN SEARCH REPORT

Application Number

EP 18 15 0193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRANTIK BHATTACHARYYA ET AL: "Analysis of user keyword similarity in online social networks", SOCIAL NETWORK ANALYSIS AND MINING, vol. 1, no. 3, 6 October 2010 (2010-10-06), pages 143-158, XP055488080, Vienna ISSN: 1869-5450, DOI: 10.1007/s13278-010-0006-4 * abstract * * Sections 3-5; figure 3 * | 1-15 | INV. G06F17/27 G06Q50/00 |
| A | FEIFEI KOU ET AL: "Social network search based on semantic analysis and learning", CAAI TRANSACTIONS ON INTELLIGENCE TECHNOLOGY, vol. 1, no. 4, 1 October 2016 (2016-10-01), pages 293-302, XP055487881, ISSN: 2468-2322, DOI: 10.1016/j.trit.2016.12.001 * abstract * * Sections 2.2, 2.3, 3 * | 1-15 | |
| A | US 2016/292157 A1 (ZHANG LEI [US] ET AL) 6 October 2016 (2016-10-06) * abstract * * paragraphs [0004], [0040], [0041] * | 10-15 | TECHNICAL FIELDS SEARCHED (IPC) G06F G06Q |

The present search report has been drawn up for all claims

| Place of search | Date of completion of the search | Examiner |
|---|---|---|
| Berlin | 27 June 2018 | Woods, Justin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 15 0193

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2018

| Patent document cited in search report | Publication date | Patent family member(s) | Publication date |
|---|---|---|---|
| US 2016292157 A1 | 06-10-2016 | NONE | |

For more details about this annex : see Official Journal of the European Patent Office, No. 12/82